# EUROPEAN PATENT APPLICATION

(11) **EP 2 606 739 A1**
(43) Date of publication of application: **26.06.2013**
(21) Application number: 11819847.2
(22) Date of filing: 18.08.2011
(51) Int. Cl.: A23C 9/123

(54) **FERMENTED MILK HAVING LITTLE LACTOSE AND METHOD FOR PRODUCING SAME**

(30) Priority: 21.08.2010 JP 2010185669
(71) Applicant: Meiji Co., Ltd., Koto-ku Tokyo 136-8908 (JP)
(72) Inventor: HORIUCHI Hiroshi, Odawara-shi Kanagawa 250-0862 (JP)
(74) Representative: Pitchford, James Edward
(86) International application number: PCT/JP2011/068663
(87) International publication number: WO 2012/026384

(57) **Abstract**

[Problem] The purpose of the present invention is to provide a method that is for producing a fermented milk and that can maintain flavor and quality at a certain level regardless of the condition of lactobacilli or an enzyme. [Solution] The present invention relates to a method for producing a fermented milk, said method containing a fermentation step for fermenting a starting material milk containing an enzyme, and a deoxygenation processing step performed before fermentation. Also, the optimum pH of activity of the enzyme is in the neutral region, and the enzyme is inactivated in the acidic region. In the active state, the enzyme can break down lactose contained in the starting material milk. As demonstrated by an embodiment, by performing deoxygenation processing before fermentation, it is possible to maintain the flavor and quality of the fermented milk at a certain level regardless of the condition of lactobacilli or the enzyme.

## Description

### Technical Field

The present invention relates to a method for producing fermented milk capable of stabilizing flavor and quality regardless of change in activity of lactobacilli or an enzyme by using deoxygenized raw ingredient milk, and the fermented milk produced by the method.

### Background Art

JP 3389377 B1 (Patent Literature 1) and JP 9-084520 A (Patent Literature 2) disclose a method for producing fermented milk using an enzyme (lactase) which has optimum pH in a neutral region and loses its activity in an acidic region. The method for producing fermented milk disclosed in Patent Literature 1 includes decomposition of lactose by means of the lactase and inactivation of lactase by fermenting the raw ingredient milk to lower the acidity (pH) of the raw ingredient milk.

In JP 2005-348703 A (Patent Literature 3) and Non-Patent Literature 1 described below, a method for producing fermented milk including substitution of oxygen dissolved in raw ingredient mix for fermented milk with inert gas is disclosed.

### Citation List

### Patent Literatures

Patent Literature 1: JP 3389377 B1
Patent Literature 2: JP 9-084520 A
Patent Literature 3: JP 2005-348703 A

### Non-Patent Literature

Non-Patent Literature 1: Gabriela Cortesa, et al., "Production of β-galactosidase by kluyveromyces marxianus under oscillating dissolved oxygen tension, Process Biochemistry (2005) Vol. 40, No. 2, p. 773-778

### Summary of Invention

### Technical Problem

The fermentation speed varies depending on activity of lactobacilli, and lactose decomposing activity varies depending on activity of an enzyme. For such reasons, the method for producing fermented milk disclosed in Patent Literature 1 is problematic in that it is difficult to maintain flavor and quality of fermented milk at a certain level, because the time required to ferment the raw ingredient milk or to decompose lactose changes according to change in activity of lactobacilli or activity of an enzyme. Further, the method for producing fermented milk disclosed in Patent Literature 1 is also problematic in that flavor and quality of fermented milk differs depending on a lot even when fermented milk is produced under the same conditions.

Under the circumstances, an object of the invention is to provide a method for producing fermented milk that can maintain flavor and quality at a certain level regardless of the condition of lactobacilli or an enzyme.

### Solution to Problem

The invention is basically based on a finding that, by performing a deoxygenation treatment before fermentation of raw ingredient milk containing an enzyme, flavor and quality of the fermented milk can be maintained at a certain level regardless of the condition of lactobacilli or an enzyme.

Specifically, the first aspect of the invention relates to a method for producing fermented milk including a fermentation step of fermenting raw ingredient milk containing an enzyme and a deoxygenation step of performing a deoxygenation treatment before fermentation. Further, the optimum pH of activity of the enzyme is in the neutral region, and the enzyme is inactivated in the acidic region. In the active state, the enzyme can decompose lactose contained in the raw ingredient milk. As demonstrated in Examples, by performing a deoxygenation treatment before fermentation, flavor and quality of the fermented milk can be maintained at a certain level regardless of the condition of lactobacilli or an enzyme. A preferred embodiment of the first aspect of the invention involves the use of lactase (in particular, lactase derived from Kluyveromyces lactis) as the enzyme. Further, during the fermentation step, lactose included in the raw ingredient milk is decomposed to inactivate the enzyme. The fermentation step is a step in which decomposition rate of lactose in the raw ingredient milk is between 75% by weight and 90% by weight.

The second aspect of the invention relates to fermented milk which is obtained by the production method described the above.

### Advantageous Effects of Invention

According to the invention, fermented milk with constant flavor and quality can be obtained regardless of the condition of lactobacilli or an enzyme by performing a deoxygenation treatment of raw ingredient milk.

### Brief Description of Drawings

Fig. 1 is a graph illustrating time-dependent change in decomposition rate of lactose and time-dependent change in acid level of fermented milk when GODO-YNL10000 (that is, lactase) is heated at normal temperature for one hour and the heated GODO-YNL10000 is simultaneously added with a starter.
Fig. 2 is a graph illustrating time-dependent change in decomposition rate of lactose and time-dependent change in acidity (pH) of fermented milk when GODO-YNL10000 (that is, lactase) is heated at normal temperature for one hour and the heated GODO-YNL10000 is simultaneously added with a starter.
Fig. 3 is a graph illustrating the measured data of decomposition rate of lactose in the obtained fermented milk.

### Description of Embodiments

The method for producing fermented milk which relates to the first aspect of the invention includes a deoxygenation step of deoxygenating raw ingredient milk and a fermentation step for fermenting the raw ingredient milk. During the fermentation step, the enzyme decomposes lactose. Thus, the raw ingredient milk in the fermentation step includes an enzyme. The enzyme may be added to the raw ingredient milk either before the deoxygenation step or after the deoxygenation step.

Raw materials, apparatuses and production conditions for producing fermented milk are disclosed, for example, in JP 2004-180526 A, JP 2005-176603 A, JP 2006-288309 A, US 6,025,008, US 5,482,723, US 5,096,731 and US 4,938,973 (the contents of these references are incorporated herein by reference), and the disclosure therein can be appropriately adopted for the invention.

In the present description, "fermented milk" can be yogurt or any of "fermented milk", a "dairy lactobacilli drink", or a "lactobacilli drink" defined in the Ministerial Ordinance concerning the Ingredient Standards for Milk and Dairy Products. It is expected that the fermented milk obtained by the production method of the invention has hardness at a certain level. Thus, examples of "fermented milk" of the invention include set-type yogurt (solid-type fermented milk), soft-type yogurt (paste-type fermented milk), and drink-type yogurt (liquid-type fermented milk). The preferred fermented milk of the invention is set-type yogurt such as plain type yogurt. Generally, plain-type yogurt is manufactured by placing raw materials in a container and subsequently fermenting it (post-fermentation). On the other hand, soft-type yogurt and drink-type yogurt are manufactured by atomizing and homogenizing the fermented milk which has been previously fermented and filling it in a container (pre-fermentation).

### Deoxygenation step

The deoxygenation step is a step for removing oxygen that is present in raw ingredient milk by, for example, adding inert gas into the raw ingredient milk or removing gas at low pressure or at a vacuum. The deoxygenation step is thought to bring benefit to protect proteins as well as removing oxygen.

"Raw ingredient milk" is ingredient of fermented milk such as yogurt, and that is also called as yogurt mix or fermented milk mix. According to the invention, it is possible to use any type of known raw ingredient milk. Raw ingredient milk includes those without sterilization and those with sterilization. Specific ingredients or raw materials for the raw ingredient milk are, for example, water, raw milk, sterilized milk, non-fat milk, full-fat powdered milk, skimmed milk, butter milk, butter, cream, whey protein concentrate (WPC), whey protein isolate (WPI), α (alpha)-La, and β (beta)-Lg. It is also possible to add pre-heated gelatin or the like to the raw ingredient milk. It is possible to add an enzyme in advance to the raw ingredient milk such that lactose is decomposed. Raw ingredient milk is already known in the field and thus it is possible to prepare it based on a known method.

In the deoxygenation step, for example, it is possible to suitably use known apparatuses to replace the oxygen dissolved in raw ingredient milk with inert gas. Specifically, it is possible to release oxygen that is dissolved in raw ingredient milk by using inert gas by means of suitable apparatuses disclosed in JP 2001-78665 A, JP 2001-9206 A, or JP 2005-110527 A (the contents of these references are incorporated herein by reference), for example. The "inert gas" may include gas such as nitrogen in addition to rare gas such as helium, neon, argon, and xenon.

It is also possible to remove oxygen dissolved in the raw ingredient milk by means of deaeration in place of incorporation of inert gas. Examples of apparatus for deaeration that may be appropriately used include apparatuses that are disclosed in JP 2002-370006 A and JP 2005-304390 A (the whole contents of these references are incorporated herein by reference).

In the deoxygenation step, for example, a deoxygenation may be performed to the extent that the amount of oxygen dissolved in the raw ingredient milk (dissolved oxygen concentration, DO) becomes 5 ppm or less, preferably 3 ppm or less, and more preferably 2 ppm or less.

### Fermentation step

The fermentation step is a step for fermenting the raw ingredient milk. The fermentation step may include two steps of fermentation. By having the fermentation step, it is possible to obtain commercially valuable fermentation milk. It is preferred in the invention to mix a starter with the raw ingredient milk and then perform the fermentation. The raw ingredient milk used in the fermentation step contains an enzyme.

It is possible to suitably use known starters as "a starter". A preferred starter includes a lactobacilli starter. It is possible to use one kind or two or more kinds of lactobacilli starters selected from lactobacilli or yeast that is generally used for production of fermented milk, in addition to Lactobacillus bulgaricus (L. bulgaricus), Streptococcus thermophilus (S. thermophilus), Lactobacillus lactis (L. lactis), Lactobacillus gasseri (L. gasseri), and Bifidobacterium. Among these, a starter that contains a mixture starter containing Lactobacillus bulgaricus (L. bulgaricus) and Streptococcus thermophilus (S. thermophilus), both of which are the standards of the Codex Standard as yogurt starters, as a base for a starter is preferable one. Using the yogurt starters, it is possible to add other lactobacilli bacteria, such as Lactobacillus gasseri (L. gasseri) and Bifidobacterium, depending on the characteristics of the desired fermented milk. The addition amount of a starter may be suitably adjusted based on, for example, the conventional amount that is used in usual method for producing fermented milk. An inoculation of a starter can be conducted according to known methods used in production of fermented milk.

The enzyme of the invention has optimum pH of activation in the neutral region and loses its activity in the acidic region. The enzyme can decompose lactose when the enzyme is in an active state. Examples of the enzyme include the lactase that is disclosed in Patent Literature 1. Examples of lactase include those derived from bacteria or yeast. The optimum pH for their activity is 6.3 to 7.5 and the pH at which they lose their activity is 6.0 to 4.0. Preferred examples of lactase include lactase derived from Kluyveromyces Lactis and lactase derived from Kluyveromyces Fragilis. The lactase derived from Kluyveromyces Lactis includes Kluyveromyces Lactis itself and lactase that is derived from Kluyveromyces Lactis. Lactase is also commercially available. Examples of the commercially available lactase include LACTASE F (manufactured by Amano Enzyme Inc.), LACTOLES L-3 (manufactured by Daiwa Fine Chemicals Co., Ltd.), and LACTOLES L-10 (manufactured by Daiwa Fine Chemicals Co., Ltd.). In general, when enzymes have similar properties including optimum pH and inactivation pH, they exhibit similar activities even when their origin or source for manufacture is different. For such reasons, as the results are actually given for lactase in the examples below, when an enzyme exhibits an activity which has an optimum pH in the neutral region and is inactivated in the acidic region, it is believed that the enzyme can suitably decompose lactose under the conditions of the invention. In particular, as lactases that have an activity which has an optimum pH in the neutral region and are inactivated in the acidic region are believed to have common properties, it is believed that they can suitably decompose lactose regardless of their origin.

The fermentation conditions such as fermentation temperature may be suitably adjusted with consideration of kinds of lactobacilli added to the raw ingredient milk, desired flavor of fermented milk, and the like. Specific examples of the condition include a condition in which the temperature of a fermentation room (fermentation temperature) is maintained from 30°C to 50°C. Under such a temperature, generally lactobacilli has high activity and thus it is possible to promote fermentation effectively. The more preferred fermentation temperature is from 40°C to 45°C and still more preferred fermentation temperature is from 41°C to 44°C.

The fermentation time may be suitably adjusted based on a starter or fermentation temperature. Specific examples of the fermentation time include from 1 hour to 5 hours, and it may be from 2 hours to 4 hours.

In general, to inactivate or kill an enzyme, lactose decomposition is performed at low temperature and sterilization is carried out by heating from a viewpoint of decreasing a risk of contamination with bacteria. Fermentation is performed after that. In the invention, during the fermentation step, it is also possible that yogurt mix (raw ingredient milk) is admixed with a starter and an enzyme, and the fermentation is carried out while the enzyme is in an active state. It is also possible to perform decomposition of lactose or the like contained in the raw ingredient milk to generate an acid and to inactivate the enzyme. Such a treatment can effectively improve decomposition rate of lactose as demonstrated by the following examples. Further, since such a method does not require progressing an enzyme reaction by adding enzyme before high temperature heat sterilization, it becomes possible to simplify the steps of producing the fermented milk and it may become possible to draw out natural flavor that is intrinsic to the fermentation milk as much as possible. Furthermore, since such a treatment can effectively improve decomposition rate of lactose, it would be unnecessary to control continuously the individual decomposition rate of lactose and progress of fermentation (that is, change in acid level), and thus production control becomes very easy.

When the decomposition rate of lactose is 65% by weight or higher, it is possible to obtain fermentation milk with favorable flavor. Preferred decomposition rate of lactose is 75% by weight or higher, and it may be between 75% by weight and 90% by weight. It also may be between 80% by weight and 90% by weight.

### Examples

The invention will be described in detail by way of the following examples. However, the invention is not limited to the following examples. The raw ingredient milk was prepared by dissolving milk (87 parts by weight) and non-fat powdered milk (2 parts by weight) in tap water (13 parts by weight). The raw ingredient milk was sterilized at 95°C for 2 minutes. Then, the raw ingredient milk was cooled to 40°C. After that, a deoxygenation treatment was performed to the raw ingredient milk. 0.02 parts by weight of lactase (as an enzyme) and 2 parts by weight of a starter (lactobacilli), which is used for Meiji's Bulgaria Yogurt (registered trademark), were added to the deoxygenation treated raw ingredient milk. Finally, the raw ingredient milk was fermented (reacted) at 40°C until its pH became about 4.7. Accordingly, fermented milk was obtained (Examples 1 to 4).

As a control, fermented milk was obtained in the same manner as in the above examples except that the deoxygenation treatment was not performed (Comparative Examples 1 and 2). Further, fermented milk was obtained in the same manner as in the above examples except that the deoxygenation treatment was not performed and no an enzyme was added (Comparative Example 3).

To examine the flavor and quality of fermented milk, flavor of fermented milk, decomposition rate of lactose, and fermentation time (required time until acid level of fermented milk becomes 0.7% at fermentation temperature of 40°C) were measured for the fermented milk of Examples 1 to 4 (fermented milk of the invention) and the fermented milk of Comparative Examples 1 and 2. Table 1 exhibits the flavor of the fermented milk, the decomposition rate of lactose, and the fermentation time of fermented milk of the invention and that of Comparative Examples.

**[Table 1]**

| Table 1. Flavor and decomposition rate of lactose of fermentation milk of the present invention and Comparative Examples | | | |
|---|---|---|---|
| Sample | | Decomposition rate of lactose(%) | Fermentation time*1 |
| Example 1 | Feeling of moderate sourness and sweetness | 79.3 | 3 h 0 min |
| Example 2 | Feeling of moderate sourness and sweetness | 81.5 | 3 h 0 min |
| Example 3 | Feeling of moderate sourness and sweetness | 86.8 | 3 h 5 min |
| Example 4 | Feeling of moderate sourness and sweetness | 79.7 | 2 h 55 min |
| | Average value ± standard deviation : | 81.8 ± 3.4 | 3 h 0 min ± 5 min |
| Comparative Example 1 | Feeling of moderate sourness and sweetness | 82.4 | 3 h 15 min |
| Comparative | Feeling of moderate sweetness | 94.1 | 3 h 45 min |
| Example 2 | Average value ± standard deviation: | 88.3 ± 8.3 | 3 h 30 min ± 15 min |

| | | | |
|---|---|---|---|
| * 1 Required time to reach 0.7% of acid level at 40 °C | | | |

Normal phase column ASAHIPAK NH2P-50, 4.6 × 250 mm (manufactured by Shodex) and Guard Column ASAHIPAK NH2P-50G 4A, 4.6 × 10 mm (manufactured by Shodex) for glucose analysis were used as HPLC for measurement of the concentration of lactose.

As listed in Table 1, the average decomposition rate of lactose of Examples 1 to 4 was 81.8 [%] with standard deviation of 3.4 [%], and average fermentation time was 3 hours with standard derivation of 5 min. The average decomposition rate of lactose of Comparative Examples 1 and 2 was 88.3 [%] with standard deviation of 8.3 [%], and average fermentation time was 3 hours and 15 minutes with standard derivation of 15 minutes. Table 1 exhibits that each of fermented milk of the invention has stable and constant flavor (balance between sour taste and sweet taste) while the fermented milk of Comparative Examples had different flavor even though they were produced in the same conditions. Table 1 further discloses that the quality (decomposition rate of lactose) and fermentation time were almost constant for the fermented milk of the invention while the quality and fermentation time had variations for the fermented milk of Comparative Examples. Namely, it is shown that the methods of Comparative Examples 1 and 2 cannot control the taste and quality of fermented milk to be stable. It is noted that the method of Comparative Example 3 is generally used when common fermented milk is produced. Because lactase was not added to the raw ingredient milk, the fermented milk of Comparative Example 3 is thought to have more lactose than that of Examples 1 to 4, although it is not particularly listed in Table 1.

Next, hardness (Curd tension) was measured. Curd tension was evaluated by means of Neo Curd meter M302 (produced by Itechno Engineering Co. previously named Iio Electronic Co.). The Curd meter measures insert angle to fermented milk by using a yogurt knife attached with 100 g weight and exhibits the measured value by means of curvature. The vertical axis of the graph is height of the knife and the horizontal axis is the weight that is added further to the 100 g weight. In the graph, the length of 10 mm at the vertical axis and the length of 10 g at the horizontal axis are the same. The length of the insert angle curvature till fracture is an index of hardness value (hardness and elasticity) (g).

Table 2 exhibits the hardness of the fermented milk obtained in each condition.

**[Table 2]**

| Table 2. Fermentation time and hardness of obtained fermented milk | |
|---|---|
| Sample | Hardness (Curd Tension) |
| Examples 1 to 4 | 45 g |
| Comparative Examples 1 and 2 | 35 g |
| Comparative Example 3 | 45 g |

The fermented milk of the invention has relatively high hardness, which is almost the same hardness as the fermented milk of Comparative Example 3, which is produced by conventional method. In contrast, the hardness of the fermented milk obtained in Comparative Examples 1 and 2 was at least 20% lower than that of the fermented milk of the invention or Comparative Example 3.

### [Examples 5] Determination of the method for simultaneous addition of enzyme and starter (optimum temperature)

GODO-YNL10000 was used as an enzyme. GODO-YNL10000 (10,000 U/g), which is GODO-YNL diluted with glycerin to 5 times, contains lactase that is derived from Kluyveromyces lactis. Thus, the optimum reaction temperate, pH and condition of losing activity of GODO-YNL10000 are the same as those of GODO-YNL. Namely, the optimum condition of decomposition reaction caused by GODO-YNL10000 includes 35 to 45°C and neutral region. GODO-YNL10000 gradually loses its activity under the environment of more than 50°C. Further, GODO-YNL10000 gradually loses its activity when it is put under acid conditions such as pH of lower than pH 5. GODO-YNL10000 protects an enzyme with glycerin. Thus, GODO-YNL10000 has improved heat resistance by containing glycerin. To determine the heat resistance of stock solution of GODO-YNL10000, GODO-YNL10000 was heated at the temperatures listed in Table 3 below for 1 hour and fermented milk was produced in the same manner as in Example 1 except that heated GODO-YNL10000 and a starter are added simultaneously. Decomposition rate of lactose after completion of the fermentation was measured by using F-kit. The results are given in Table 3.

**[Table 3]**

| Heating temperature (°C) | Decomposition rate of lactose(%) | State of enzyme |
|---|---|---|
| Normal temperature(25 °C) | 78.8 | Normal |
| 40 | 80.1 | Normal |
| 45 | 81.9 | Normal |
| 50 | 77.1 | Normal |
| 55 | 76.9 | Normal |
| 60 | 54.1 | Reduced activity |
| 65 | 23.8 | Completely inactivated |
| No enzyme added | 23.5 | - |

Table 3 exhibits that the optimum reaction temperature of GODO-YNL 10000 is around 45°C. When the decomposition rate of lactose is the same or greater than 65%, it is possible to obtain fermented milk with favorable flavor. Therefore, it can be seen from Table 3 that temperature of from normal temperature to 55°C brings favorable fermented milk when GODO-YNL10000 is used to produce fermented milk. Usually in producing fermented milk, after heat sterilization of yogurt mix which is obtained by decomposition of lactose at low temperature, the fermented milk is adjusted to have the optimum temperature for fermentation. In that case, the enzyme loses its activity by the heat sterilization. The decomposition rate of lactose for the fermented milk produced by means of conventional methods is about 70% even for the best case. In contrast, when GODO-YNL10000 and a starter are added simultaneously, it was possible to obtain decomposition rate of lactose of more than 80% as listed in Table 3. It is believed that, when the enzyme and lactobacilli are added to yogurt mix simultaneously, the enzyme loses its activity by acid generated through the decomposition of lactose during the fermentation step.

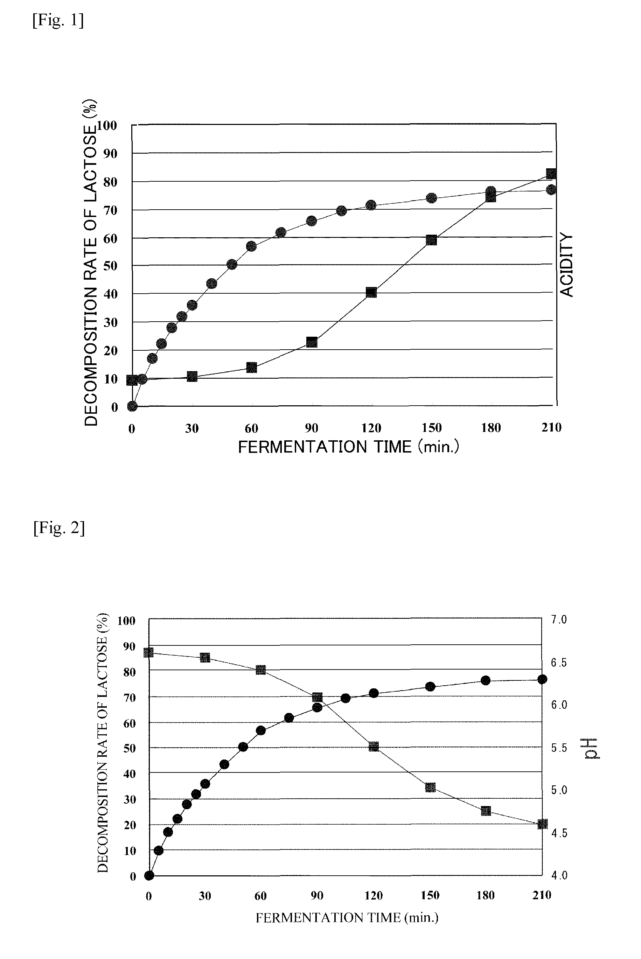

Fig. 1 is a graph that illustrates the time-dependent change of the decomposition rate of lactose of fermented milk and the time-dependent change of acid level of fermented milk when GODO-YNL10000 (lactase), which is kept for one hour at normal temperature, is added together with a starter. The circles in the figure represent the decomposition rate of lactose and the squares in the figure represent the acid level. Fig. 2 is a graph that illustrates the time-dependent change of the decomposition rate of lactose of fermented milk and the time-dependent change of acidity (pH) of fermented milk when GODO-YNL 10000 (lactase), which is kept for one hour at normal temperature, is added together with a starter. The circles in the figure represent the decomposition rate of lactose and the squares in the figure represent the acidity. Fig. 1 illustrates that the acid level of fermented milk increases as lactose is decomposed according to progress of the fermentation. Fig. 2 illustrates that the acidity of the fermented milk decreases as lactose is decomposed according to progress of the fermentation.

### [Example 6] Determination of the method for simultaneous addition of enzyme and starter (addition amount)

Next, determination was made with regard to the addition amount of an enzyme. Fermented milk was produced in the same manner as in Example 4 except for adding GODO-YNL10000 (lactase), which is kept for 1 hour at 38°C, at an addition rate (% by weight) listed in Table 4 together with a starter. The results are listed in Table 4. In Table 4, F-kit indicates the result of measurement by F-Kit and HPLC indicates the result of measurement performed by High Performance Liquid Chromatography.

**[Table 4]**

| Table 4 Evaluation of heat resistance of GODO-YNL10000 | | |
|---|---|---|
| Addition rate of lactase (%) | | Decomposition rate of lactose (%) |
| | F-kit | HPLC |
| 0.05 | 71.3 | 72.9 |
| 0.06 | 71.2 | 74.2 |
| 0.07 | 76.9 | 78.2 |
| 0.08 | 78.6 | 81.7 |
| 0.10 | 81.4 | 85.4 |
| 0.12 | 84.8 | 84.7 |

Table 4 exhibits that favorable decomposition rate of lactose can be obtained even when lactase is added just in an amount of about 0.05% by weight. Further, it exhibits that it is possible to obtain high decomposition rate of lactose when lactase is added in an amount of 0.1% by weight or more. Namely, the conventional method for producing fermented milk controls the quality of fermented milk by frequent measuring of decomposition rate of lactose by using, for example, MEDI-SAFE (registered trademark). However, adding an enzyme (lactase) and lactobacilli (starter) simultaneously to yogurt mix brings very high decomposition rate of lactose as illustrated in Table 4. Thus, it can be said that, for a case in which an enzyme and lactobacilli are added simultaneously to yogurt mix, favorable fermented milk can be obtained by controlling an addition amount of the enzyme. Thus, adding an enzyme and lactobacilli simultaneously to yogurt mix can lead to easier production control and brings improvement of productivity.

### [Example 7] Determination of the method for simultaneous addition of enzyme and starter (determination of deviation)

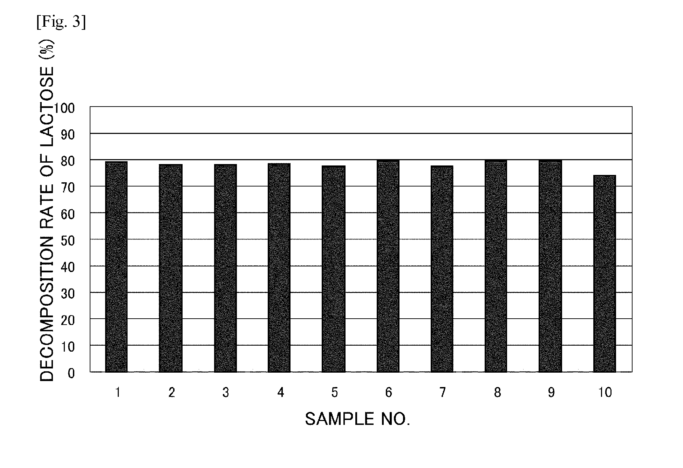

Ten lots of fermented milk, in which decomposition of lactose has been performed at normal temperature as described in Example 5, were prepared and decomposition rate of lactose in the obtained fermented milk was measured by means of F-Kit. The result is illustrated in Fig. 3. Fig. 3 is a graph illustrating the measured data of decomposition rate of lactose in the obtained fermented milk. From Fig. 3, it can be said that the decomposition rate of lactose in the obtained fermented milk is stable at high value.

### [Example 8] Determination by using lactase other than GODO-YNL10000 (lactase)

Determination was made on the method for simultaneous addition of an enzyme and a starter by using lactase purchased from Nagase ChemteX Corporation. In Example 5, instead of GODO-YNL10000 (lactase), the lactose purchased from Nagase ChemteX Corporation was added at an addition rate (0.1% by weight) listed in Table 5 simultaneously with a starter. The fermentation temperature was 40°C and the fermentation time was three hours. The lactase has the optimum pH of activity in the neutral region, and is inactivated in the acidic region. The results of the example are given in Table 5.

**[Table 5]**

| Decomposition rate of lactose when a lactobacillus starter and enzyme (lactase) are added simultaneously | | | | |
|---|---|---|---|---|
| Enzyme addition rate [%] | Fermentation temperature [°C] | Fermentation time [h] | Decomposition rate of lactose [%] | Determination method |
| 0.1 | 40 | 3 | 87.4 | F-kit (lactose/galactose) |
| 0.1 | 40 | 3 | 87.2 | F-kit (lactose/galactose) |
| | | Average | 87.3 | |
| | | ± SD | 0.2 | |

The aforementioned lactase derived from Kluyveromyces Lactis can be preferably used in the invention. As listed in Table 5, it can be said that in respect of lactase which has the optimum pH of activity in the neutral region and is inactivated in the acidic region, fermented milk exhibiting stably high decomposition rate of lactose can be obtained.

### Industrial Applicability

The invention can be used in food industry.

## Claims

1. A method for producing fermented milk, the method comprising:
a fermentation step of fermenting a raw ingredient milk including a starter and an enzyme; and
a deoxygenation step of deoxygenizing the raw ingredient milk before the fermentation step,
wherein an optimum pH of activity of the enzyme is in a neutral region, the enzyme is inactivated in an acidic region, and the enzyme decomposes lactose included in the raw ingredient milk in an active state.

2. The method for producing fermented milk according to claim 1, wherein the enzyme is lactase.

3. The method for producing fermented milk according to claim 2, wherein the lactase is lactase derived from Kluyveromyces Lactis.

4. The method for producing fermented milk according to claim 1, wherein the enzyme is inactivated by decomposing the lactose included in the raw ingredient milk during the fermentation step.

5. The method for producing fermented milk according to claim 1, wherein a decomposition rate of the lactose in the raw ingredient milk is between 75% by weight and 90% by weight during the fermentation step.

6. Fermented milk produced by the method according to any one of claims 1 to 5.
